# EUROPÄISCHE PATENTSCHRIFT

(11) **EP 1 407 436 B1**
(45) Veröffentlichungstag und Bekanntmachung des Hinweises auf die Patenterteilung: **07.09.2005**
(21) Anmeldenummer: 02745369.5
(22) Anmeldetag: 07.06.2002
(51) Int. Cl.: G08G 1/16

(54) **FAHRERASSISTENZSYSTEM**
DRIVER ASSISTANCE SYSTEM
SYSTEME D'ASSISTANCE DE CONDUCTEUR

(30) Priorität: 06.07.2001 DE 10132386
(43) Veröffentlichungstag der Anmeldung: 14.04.2004
(60) Teilanmeldung: 04019232.0
(73) Patentinhaber: Volkswagen Aktiengesellschaft, 38436 Wolfsburg (DE)
(72) Erfinder: GöLLINGER, Harald, 38350 Helmstedt (DE); MARSCHALL, Jens, 38170 Schöppenstedt (DE); TENZER, Axel, 38518 Gifhorn (DE); MAURER, Markus, 85113 Böhmfeld (DE); VON HOLT, Volker, 38106 Braunschweig (DE); ANKLAM, Carsten, 38104 Braunsschweig (DE)
(74) Vertreter: Meyer, Enno
(86) Internationale Anmeldenummer: PCT/EP2002/006271
(87) Internationale Veröffentlichungsnummer: WO 2003/005325

(56) Entgegenhaltungen:
- EP-A- 0 735 517
- EP-A- 1 090 800
- WO-A-95/14939
- GB-A- 2 268 608
- GB-A- 2 320 326
- US-A- 5 189 619
- US-A- 5 529 138
- US-A- 5 983 161
- US-A- 6 049 747
- US-B1- 6 225 891

## Beschreibung

Die Erfindung betrifft ein Fahrerassistenzsystem, das den Fahrer eines Kraftfahrzeugs beim Führen des Kraftfahrzeugs unterstützt bzw. sogar in kritischen Situationen, in denen erkennbar eine Handlung des Fahrers die gegebene Situation, beispielsweise eine Kollision, nicht mehr verhindern kann, die Kontrolle über das Fahrzeug übernimmt, um die Kollisionsfolgen zu minimieren.

Es sind Systeme für Fahrzeuge bekannt, die den Fahrer in kritischen Situationen in der Weise unterstützen, daß ein bevorstehender Unfall durch ein optimales Abbremsen möglichst verhindert oder zumindest die Aufprallgeschwindigkeit am Kollisionspunkt auf ein Minimum reduziert wird. Ein derartiges automatisches Bremssystem ist unter der allgemeinen Bezeichnung ABS in vielen Fahrzeugen im Einsatz. Die Grundfunktion des ABS besteht darin, bei einer Notbremsung ein Blockieren der Räder zu vermeiden, um die Lenkfähigkeit des Fahrzeugs auch bei einer Vollbremsung beibehalten zu können. Der Fahrer hat dadurch die Möglichkeit, auch bei einer Vollbremsung den Kollisionspunkt zu umfahren und dadurch eine Kollision zu vermeiden, sofern es sich nicht um eine unvermeidliche Unfallsituation handelt, in der ein Ausweichen aus fahrphysikalischen Gründen überhaupt nicht mehr möglich ist.

Ferner sind Systeme bekannt, die durch gezieltes Beschleunigen bzw. Verzögern und/oder durch Ausweichmanöver eine Kollision des Fahrzeugs mit einem Hindernis verhindern sollen. Derartige, kurz als CAS (Collision Avoidance Systems) bezeichnete Systeme, sollen das Fahrzeug aus mittels Sensoren erkannten Kollisionssituationen dadurch herausführen, daß durch eine vom Fahrer entkoppelte Lenkung und damit unabhängig vom Fahrer auszuführende Lenkbewegungen sowie ebenfalls fahrerunabhängig gesteuerte Beschleunigungen bzw. Verzögerungen des Fahrzeugs eine Kollision vermieden wird. In der EP 0 582 236 wird ein Netzwerk vorgeschlagen, das mittels Auswertung von laufender CCD-Kamera aufgenommener Umgebungsbilder die Umgebung auf mögliche Kollisionen auswertet und anhand zusätzlicher Signale des Fahrzustandes des Fahrzeuges eine Beeinflussung von Fahrzeuggeschwindigkeit und Lenkbewegung vornimmt. Eine andere Lösung schlägt die DE 43 02 527 vor, bei der durch Segmentierung des zu überwachenden Straßenbereichs unter Einbeziehung von Zustandsinformationen des Fahrzeuges Regeln abgeleitet werden, wie durch Brems- und Lenkoperationen einem erkannten Hindernis ausgewichen werden kann.

Aus der EP 0 545 437 B1 ist ein Verfahren zur Vermeidung von Kollisionen von Kraftfahrzeugen bekannt, mit dem in Fahrtrichtung beabstandete Fahrzeuge erfaßbar sind und mittels Wammeldungen der Fahrer bei unzulässigen Annäherungen gewarnt wird. Der Fahrer hat dann aufgrund des noch nicht erreichten Abstandsminimums Gelegenheit, selbst entsprechende Bremsvorgänge einzuleiten. Bei Unterschreiten eines minimal zulässigen Abstandes wird das Fahrzeug automatisch abgebremst, so daß sich der geforderte Sicherheitsabstand wieder einstellt. In einer plötzlich auftretenden Unfallsituation ist dieses System allenfalls dazu geeignet, eine automatische Notbremsung zur optimalen Geschwindigkeitsverringerung vorzunehmen.

Aus der DE 38 30 790 A1 ist weiterhin ein Verfahren und eine Vorrichtung zur automatischen Kollisionsvermeidung von automatisch führbaren Fahrzeugen bekannt, die mittels Sensoren eine laufende Erkennung von Kollisionsgefahren vornimmt. Wird eine Kollisionsgefahr festgestellt, führt das System das Fahrzeug entlang einer kollisionsfreien Fahrlinie um ein erkanntes Hindernis herum. Tritt jedoch eine unvermeidbare Unfallsituation mit einer bevorstehenden Kollision auf, so besteht bei diesem System die Gefahr, daß das automatisch gelenkte Fahrzeug aus einer günstigeren Kollisionsposition in eine für die Insassen ungünstigere Kollisionsposition gebracht wird.

Aus der DE 196 47 283 A1 ist eine Vorrichtung zur Vermeidung und/oder Minimierung von Konfliktsituationen im Straßenverkehr bekannt, die das Fahrverhalten eines Fahrzeuges in einer unvermeidlichen Unfallsituation steuern kann. Ist der Fahrzeugführer nicht mehr in der Lage, eine bevorstehenden Unfall zu vermeiden, greift die Vorrichtung ein und ergreift Maßnahmen zur Schadensbegrenzung, in dem sie beispielsweise die Kollision mit einer Mülltonne auf dem Bürgersteig dem Zusammenstoß mit einer auf der Fahrbahn befindlichen Person vorzieht. Dabei fährt die Vorrichtung eine automatische Lenkfunktion durch.

US-A 5,983,161 beschreibt ein Verfahren zum Assistieren eines Fahrers eines Kraftfahrzeuges, in welchem eine Vorhersage der aktuellen Situation des Umfelds eines Kraftfahrzeugs aus erfaßten Informationen über die äußere Umgebung des Kraftfahrzeugs abgeleitet wird und, basierend auf dieser Situations-Vorhersage, eine Entscheidung über Gegenmaßnahmen getroffen wird.

US-A 5,189,619 beschreibt ein adaptives Fahrzeugsteuersystem, bei dem ein geeigneter Abstand zwischen einem Fahrzeug und einem davor fahrenden Fahrzeug als Funktion des dynamischen Fahrverhaltens eines Fahrers eingestellt wird, wobei das dynamische Verhalten des Fahrers seine Fahrcharakteristiken wiedergibt.

Nachteilig bei den bekannten Systemen ist, daß diese allenfalls Teilsituation des aktuellen Geschehens beurteilen und entsprechend unflexibel, im allgemeinen nach einem vorbestimmten Schema, reagieren.

Der Erfindung liegt daher die Aufgabe zugrunde, ein Verfahren zum Assistieren des Fahrers eines Kraftfahrzeugs sowie ein derartiges System zu schaffen, wobei eine mögliche Kollisionssituation frühzeitig erkannt und flexibel auf die Situation reagiert wird, so daß die Wahrscheinlichkeit einer Kollisionsvermeidung erhöht und im Falle einer Kollision mögliche Unfallfolgen weiter herabsetzt werden.

Diese Aufgabe wird durch ein Verfahren nach Anspruch 1 und ein System nach Anspruch 9 gelöst. Bevorzugte Ausgestaltungen der Erfindung sind Gegenstand der Unteransprüche.

In dem erfindungsgemäßen Verfahren zum Assistieren eines Fahrers eines Kraftfahrzeugs, in welchem eine Vorhersage der aktuellen Situation des Umfelds eines Kraftfahrzeugs aus erfaßten Informationen über die äußere Umgebung des Kraftfahrzeugs abgeleitet und basierend auf dieser Situationsvorhersage eine Entscheidung über Gegenmaßnahmen getroffen wird, wird eine Vorhersage der Fahrerreaktion getroffen, und die Fahrerreaktionsvorhersage und die Situationsvorhersage werden dann miteinander verknüpft, um zu einer Entscheidung über Gegenmaßnahmen zu gelangen. Dabei wird aus den Informationen sonstiger Sensoren und Bedienelemente unter Verwendung einer Fahrerbeurteilungs-Wissensbasis eine Fahrertyp-Erkennung durchgeführt, die als Ergebnis eine Fahrertyp-Representation liefert, wobei aus der Fahrertyp-Representation und der Situations-Vorhersage eine Fahrerreaktions-Vorhersage abgeleitet wird.

Durch die Verknüpfung der Fahrerreaktionsvorhersage mit der Situationsvorhersage ist es möglich in Abhängigkeit vom Verhalten des Fahrers auf die aktuelle Situation zu reagieren, d.h. es wird das Gesamtsystem bestehend aus dem Fahrer und dem Kraftfahrzeug in der Verkehrsumgebung wird einer Bewertung unterzogen. Beinhaltet beispielsweise die Vorhersage eine langsame Fahrerreaktion, so kann beispielsweise die automatische Notbremsung, im folgenden als ANB bezeichnet, früher aktiviert werden. Es können auch weitere Gegenmaßnahmen eingeleitet werden, beispielsweise kann eine Vorwarnung an den Fahrer über eine eventuelle ANB oder auch bei anderen kritischen Situationen abgegeben werden, beispielsweise durch leichtes Einbremsen oder Bremskraftmodulation, d.h. Rubbeln der Bremse. Der Zeitpunkt derartiger Vorwarnungen kann daher flexibel unter Berücksichtigung der Fahrereigenschaften gewählt werden, was die Sicherheit erhöht.

Vorzugsweise werden die durch einen oder mehreren Umgebungserfassungsensoren erfaßten Informationen der Umgebung des Kraftfahrzeugs einer Sensorfusion und Szeneninterpretation unterzogen, wodurch unter Verwendung von Bewegungsmodellen und Formmodellen eine konsistente räumlich-zeitliche Beschreibung der das Kraftfahrzeug umgebende Szene abgeleitet wird, die Szenenbeschreibung wird nachfolgend einer Situationserkennung und -interpretation unter Verwendung einer Situationswissenbasis unterzogen, die erkannte und interpretierte Situation wird in einem Situationsspeicher abgelegt, der eine vorgegebene Anzahl von Situationen in zeitlicher Reihenfolge speichert, und aus den im Situationsspeicher gespeicherten Situationen wird dann die Situationsvorhersage getroffen. Vorzugsweise werden die Situationen im Situationsspeicher für einen vorbestimmten Zeitraum gespeichert, beispielsweise für eine Minute. Nach Ablauf des vorbestimmten Zeitraums werden die Situationen aus dem Speicher gelöscht, da sie zur Bewertung der aktuellen Situation aufgrund ihrer zeitlichen Entfernung keinen Beitrag mehr leisten können.

Vorzugsweise fließen in die Situationserkennung und -interpretation Informationen sonstiger Sensoren und Bedienelemente des Kraftfahrzeugs ein, wobei die sonstigen Sensoren und Bedienelemente Informationen über den Fahrer und seine Bedienung des Kraftfahrzeugs ermitteln.

Vorzugsweise wird die zeitliche Reihenfolge der Ablage der erkannten und interpretierten Situationen im Situationsspeicher zur Situations-Vorhersage verwendet, d.h. aus dem zeitlichen Zusammenhang der gespeicherten Situationen sowie aus den gespeicherten Situationen selbst wird auf die zu erwartende Situation geschlossen.

Zur Verknüpfung der Situations-Vorhersage und der Fahrerreaktions-Vorhersage wird vorzugsweise eine Fahrer/System-Verhaltenswissensbasis verwendet, um dann die erforderlichen Gegenmaßnahmen bestimmen zu können. Die Gegenmaßnahmen können durch einen Vergleich der Fahrerreaktionsvorhersage und der Situationsvorhersage mit der Fahrer/System-Verhaltenswissensbasis erfolgen.

Ein Fahrassistenzsystem zur Durchführung des oben beschriebenen Verfahrens weist eine ersten Gruppe von Sensoren mit einem oder mehrere Sensoren zur Detektion der Umgebung eines Kraftfahrzeugs, einer zweiten Gruppe von Sensoren mit einem oder mehreren Sensoren zur Detektion des Fahrers und seines Fahrverhaltens, eine Steuereinheit und eine Speichereinheit auf.

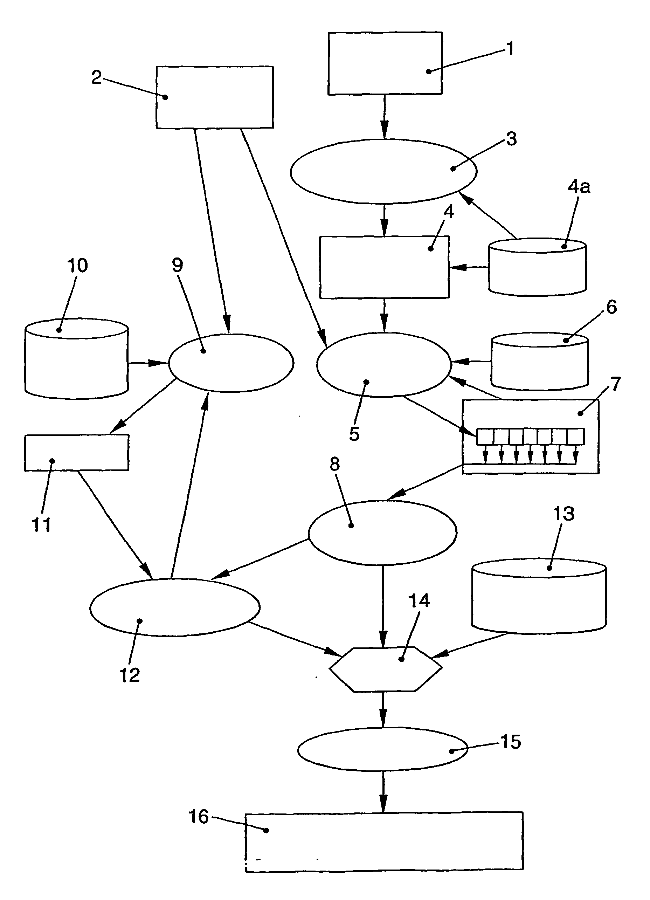

Eine bevorzugt Ausführungsform der Erfindung wird nachfolgend anhand der einzigen Figur näher erläutert.

Die Figur zeigt eine schematische Darstellung des Fahrerassistenzsystems mit der Zusammenwirkung der einzelnen Komponenten.

Zwei Gruppen von Sensoren 1, 2 nehmen Informationen aus der Umwelt auf und stellen diese dem System zur Auswertung zur Verfügung. Es können beide Gruppen von Sensoren vorhanden sind, dies ist aber keine notwendige Voraussetzung zur Funktion des Systems. Ebenso können beide Gruppen aus jeweils einem oder mehreren Sensoren bestehen. Hier sei der allgemeine Fall, daß jeweils mehrere Sensoren vorhanden sind, behandelt.

Die erste Gruppe der Sensoren 1 dient zur Erfassung des Fahrzeugumfeldes (Außensicht). Bei diesen Sensoren kann es sich sowohl um aktive wie passive Sensoren handeln, wie beispielsweise Radar-, Lidar-, Video-Sensoren, Kameras, Laserscanner, Parkradar, Regensensoren und Temperatursensoren (Außentemperatur).

Zur zweiten Gruppe 2 gehören Sensoren die den Fahrzeuginnenraum, in diesem Fall insbesondere den Zustand und das Fahrverhalten des Fahrers und eventueller Beifahrer überwachen. Hierzu kann beispielsweise eine Innenraumkamera, aber auch die Sensierung der Stellung von Gas- und Bremspedal sowie die Art der Bedienung des Lenkrads und/oder die Schalthäufigkeit, d.h. Getriebeinformation gezählt werden. Weitere Daten für die Fahrererkennung sind Bremspedalposition, Gaspedalposition, Lenkwinkel, Längsbeschleunigung, Querbeschleunigung, Gierwinkelbeschleunigung, Reibwert und Fahrzeuggeschwindigkeit .

Die Informationen der ersten Sensorgruppe 1 werden einer Sensorfusion und Szeneninterpretation 3 unterzogen mit dem Ziel eine konsistente räumlich-zeitliche (physikalische) Szenenbeschreibung 4 zu einem Zeitpunkt zu erhalten. Die Repräsentation beruht auf Bewegungs- und Formmodellen der in der Szene erwarteten relevanten Objekte, die in einer Szenenwissensbasis 4a hinterlegt sind. Auf der Basis dieser physikalischen Szenenbeschreibung lassen sich mit den verwendeten Modellen Vorhersagen über die Veränderung der Szene in den folgenden Zeitschritten treffen. Dies entspricht einer Fortschreibung der Trajektorien dieser Objekte unter Zuhilfenahme der geschätzten Zustandsgrößen dieser Objekte.

Innerhalb der Szenenbeschreibung ist es sinnvoll eine Reibwerterkennung der Fahrbahn durchzuführen, bei der beispielsweise mittels einer Kamera als Sensor der Reibwert der Fahrbahn bestimmt wird durch die Erkennung von Wasser, Eis, Schnee und/oder bestimmten Fahrbahnbelegen anhand von beispielsweise Farbe und Reflexionsverhalten und nachfolgendem Zuordnen eines Erfahrungswertes des Reibwertes zu den gemessenen Daten. Die Kenntnis des Reibwerts ist wichtig für beispielsweise das Bremsverhalten des Fahrzeugs etc..

Zur Szenenbeschreibung gehört auch die automatische Erkennung eines Stauendes durch die Auswertung der Signale optischer Sensoren (z.B. Kamera), Erkennung von Warnblinker und Bremslicht, Auswertung von Verkehrsmeldungen aus Rundfunk/Telematik erfolgen.

Da es sich bei den für Fahrerassistenzfunktionen relevanten Objekten um andere Verkehrsteilnehmer handelt, ist diese Vorhersage auf der physikalischen Zustandsebene mit hohen Unsicherheiten behaftet sobald man über einen längeren Zeitraum als typischerweise ca. 2 Sekunden prädiziert. Der Grund für diese hohe Unsicherheit liegt in dem nicht bekannten Verlauf der Steuergrößen der anderen Verkehrsteilnehmer. Eine aussagefähigere Vorhersage der zukünftigen Entwicklung des Verkehrsgeschehens läßt sich durch den Obergang auf eine andere Darstellungsebene erzielen, bei der auf die Repräsentation von Situationen übergegangen wird. Unter einer Situation ist dabei ein Kontext aus objektiver Verkehrssituation, subjektiver Fahrersituation und den Handlungsabsichten (Reaktionen) des Fahrers zu sehen. Situationen lassen sich typisch in symbolischer Form beschreiben, es sind aber auch andere, beispielsweise analoge, Repräsentationen möglich. Typisches Kennzeichen dieser Situationsbeschreibungen sind an die menschliche (umgangssprachliche) Beschreibung angelehnte Darstellungen von Situationen in der Form
Das Eigenfahrzeug befindet sich auf einer Autobahn.
Die Fahrbahn hat drei Fahrspuren je Fahrtrichtung.
In der linken Spur seitlich vom Eigenfahrzeug befindet sich ein PKW mit deutlich höherer Geschwindigkeit.
In der rechten Spur in mittlerer Entfernung fahren zwei LKW in geringem Abstand mit ca. 90km/h.
Das Eigenfahrzeug fährt mit 130 km/h in der mittleren Spur.
Die mittlere Spur ist auf ca. 300m frei."

Durch diese Beschreibungsform lassen sich die wissens- und regelbasierten Verhaltensmuster menschlicher Fahrer in natürlicher Weise erfassen und verarbeiten oder auch in Datenbanken ablegen.

Der Übergang von der physikalischen Szenenbeschreibung 4 auf die Beschreibung in Form einer Situation erfolgt durch eine Situationserkennung und -interpretation 5 im Sinne einer Bedeutungszuweisung zu den in der Szene enthaltenen Objekten unter Hinzuziehung einer Situationsdatenbasis 6 und dem Rückgriff auf die im Situationsspeicher 7 abgelegten vorangegangenen Situationen. Da die Situationserfassung die subjektive Sicht der Situation aus der Perspektive des Eigenfahrzeugs angibt, können hier auch Informationen über die Absichten des Fahrers (Blinken, Bremsen, Schalten ....) einfließen. Aus den in der Datenbasis abgelegten Regeln über typisches Verhalten von Verkehrsteilnehmern und anderen Objekte lassen sich über die rein physikalische Ebene hinausgehende Vorhersagen über das zukünftige Geschehen treffen.

Folgendes Beispiel sei gegeben:
"Ein sich in der rechten Fahrspur auf einer Autobahn an einen LKW mit hoher Geschwindigkeit annähernder PKW wird mit hoher Wahrscheinlichkeit auf die mittlere Fahrspur wechseln, um den LKW zu überholen."

Um diese Vorhersagen auf der Situationsebene nutzen zu können, lassen sich im Situationsspeicher 7 eine oder mehrere zukünftige Situationshypothesen vorhersagen.

Neben der Bestimmung der Situation erfolgt aus den Sensordaten der zweiten Sensorgruppe 2 eine Fahrertyperkennung, die, gestützt durch eine Datenbasis aus Referenzfahrermodellen zur Beurteilung der Fahrer 10, eine Fahrertyprepräsentation ermittelt, welche die für die Systemfunktion wesentlichen Merkmale des Fahrers beinhaltet und zu einer Fahrerreaktionsvorhersage 12 herangezogen werden kann. Da die Fahrerreaktion nur in Verbindung mit den vorhergesagten Situationen sinnvoll ist, geht auch diese in die Fahrerreaktionsvorhersage ein.

Die Fahrerreaktionsvorhersage andererseits kann auch zur Fahrertyperkennung rückgekoppelt werden, um über den Vergleich von Vorhersage, tatsächlich entstandener Situation und tatsächlich beobachteter Fahrerreaktion zu einer verbesserten Fahrermodellierung 11 zu gelangen.

Als Ergebnis dieses Erkennungssystems ergibt sich aus der Vorhersage der Situation 8 und der Fahrerreaktion 12 über einen mittleren bis längeren Vorausschauhorizont und deren Vergleich 14 mit dem funktionsbezogen definierten erwünschten Fahrerreaktionen 13 (eventuell fahreradaptiv), die Entscheidung über mögliche Systemmaßnahmen 15 in aktiver, eingreifender Form oder auch als passive Warnungen, wobei die realen Maßnahmen als Diversifikationen 16 bezeichnet werden.

Gegenmaßnahmen in aktiv eingreifender Form sind beispielsweise ANB (Automatische Notbremsung), ABS (Antiblockiersystem), ASR (Antischlupfregelung), ESP (Elektronisches Stabilitätsprogramm), und/oder Einleiten und Durchführen eines Lenkungseingriffs. Wenn eine Kollision unvermeidlich ist und die automatische Notbremsung eingeleitet wurde, kann ferner ein unsymmetrisches Anbremsen von Hindernissen bewirkt werden, um einen sinnvollen Aufprallwinkel beim Aufprall des Fahrzeugs auf das Hindernis zu schaffen.

Andere Gegenmaßnahmen können optische, akustische und/oder haptische Maßnahmen sein, die dem Fahrer warnen und Informationen übermitteln, so daß eine eventuell aktive Maßnahme durch eine entsprechende Fahrerreaktion noch vermieden werden kann.

Weitere Maßnahmen bei der Fahrervorwamung bzw. beim Erkennen einer Gefahrensituation können die folgenden sein:
- Zuschalten des Bremsassistenten,
- Härtere Auslegung des Fahrwerks,
- Steuern der Federung und/oder Stoßdämpfer zum waagrecht halten des Fahrzeugs,
- Überwindung des Bremslüftspiels und anderer Totzeiten.

### BEZUGSZEICHENLISTE

- 1: Umgebungserfassungssensor
- 2: Sonstige Sensoren/Bedienelemente
- 3: Szeneninterpretation
- 4: konsistente räumlich-zeitliche Szenenbeschreibung
- 4a: Bewegungs-/Formmodelle
- 5: Situationserkennung / Situationsinterpretation
- 6: Situationswissensbasis
- 7: Situationsspeicher
- 8: Situationsvorhersage
- 9: Fahrertyperkennung
- 10: Fahrerbeurteilungs-Wissensbasis
- 11: Fahrertyp-Representation
- 12: Fahrerreaktions-Vorhersage
- 13: Fahrer/System-Verhaltenswissensbasis
- 14: Vergleich
- 15: Gegenmaßnahmen
- 16: Diversifikation

## Patentansprüche

1. Verfahren zum Assistieren eines Fahrers eines Kraftfahrzeugs, in welchem eine Vorhersage (8) der aktuellen Situation des Umfelds eines Kraftfahrzeugs aus erfaßten Informationen über die äußere Umgebung des Kraftfahrzeugs abgeleitet wird, und basisrend auf dieser Situationsvorhersage (8) eine Entscheidung über Gegenmaßnahmen (15) getroffen wird, **dadurch gekennzeichnet, daß** aus Informationen sonstiger Sensoren und Bedienelemente (2) unter Verwendung einer Fahrerbeurteilungs-Wissensbasis (10) eine Fahrertyp-Erkennung (9) durchgeführt wird, die als Ergebnis eine Fahrertyp-Representation (11) liefert, wobei aus der Fahrertyp-Representation (11) und der Situations-Vorhersage (8) eine Fahrerreaktions-Vorhersage (12) abgeleitd wird, und die Fahrerreaktionsvorhersage (12) und die Situationsvorhersage (8) miteinander verknüpft werden, um zu einer Entscheidung (14) über Gegenmaßnahmen (15) zu gelangen.

2. Verfahren nach Anspruch 1, **dadurch gekennzeichnet, daß**
- die durch einen oder mehreren Umgebungserfassungsensoren (1) erfaßten Informationen der Umgebung des Kraftfahrzeugs einer Sensorfusion und Szeneninterpretation (3) unterzogen werden, wodurch unter Verwendung von Bewegungsmodellen und Formmodellen (4a) eine konsistente räumlich-zeitliche Beschreibung (4) der das Kraftfahrzeug umgebende Szene abgeleitet wird,
- die Szenenbeschreibung (4) nachfolgend einer Situationserkennung und-interpretation (5) unter Verwendung einer Situationswissenbasis (6) unterzogen wird,
- die erkannte und interpretierte Situation in einem Situationsspeicher (7) abgelegt wird, der eine vorgegebene Anzahl von Situationen in zeitlicher Reihenfolge speichert, und
- aus den im Situationsspeicher (7) gespeicherten Situationen die Situationsvorhersage (8) getroffen wird.

3. Vertahren nach Anspruch 2, **dadurch gekennzeichnet, daß** in die Situationserkennung und -interpretation (5) Informationen sonstiger Sensoren und Bedienelemente (2) des Kraftfahrzeugs einflleßen, wobei die sonstigen Sensoren und Bedienelemente (2) Informationen Ober den Fahrer und seine Bedienung des Kraftfahrzeugs ermitteln.

4. Verfahren nach einem der Ansprüche 2 oder 3, **dadurch gekennzeichnet, daß** die zeitliche Reihenfolge der Ablage der erkannten und interpretierten Situationen im Situationsspeicher (7) zur Situations-Vorhersage (8) verwendet wird.

5. Verfahren nach einem der vorangegangenen Ansprüche, **dadurch gekennzeichnet, daß** aus der Situations-Vorhersage (8) und der Fahrerreaktions-Vorhersage (12) unter Verwendung einer Fahrer/System-Verhaltenswissensbasis (13) Gegenmaßnahmen (15) abgeleitet werden.

6. Verfahren nach Anspruch 5, **dadurch gekennzeichnet, daß** die Gegenmaßnahmen durch einen Vergleich (14) der Fahrerreaktionsvorhersage (12) und der Situationsvorhersage (8) mit der Fahrer/System-Wissensbasis (13) erfolgt.

7. Verfahren nach einem der vorangegangenen Ansprüche, **dadurch gekennzeichnet, daß** als Gegenmaßnahmen (15) aktiv eingreifende Maßnahmen (16), wie ANB, ABS, ASR, ESP, und/oder Lenkungseingriff eingeleitet und durchgeführt werden.

8. Verfahren nach einem der Ansprüche 1 bis 6, **dadurch gekennzeichnet, daß** als Gegenmaßnahmen (15) optische, akustische und/oder haptische Maßnahmen (16) ergriffen werden.

9. Fahrerassistenzsystem zur Durchführung des Verfahrens nach einem der vorangegangenen Ansprüche mit einer ersten Gruppe (1) von Sensoren mit einem oder mehrere Sensoren zur Detektion der Umgebung eines Kraftfahrzeugs, einer zweiten Gruppe (2) von Sensoren mit einem oder mehreren Sensoren zur Detektion des Fahrers und seines Fahrverhaltens,einer Steuereinheit und einer Speichereinheit,
**dadurch gekennzeichnet, dass** die Steuereinheit über Mittel verfügt um die Fahrerreaktionsvorhersage (12) und die Situationsvorhersage (8) nach dem Verfahren nach einem der vorangegangenen Ansprüche zu bilden und zu verknüpfen.

## Claims

1. Method for assisting a driver of a motor vehicle, in which a prediction (8) of the current situation of the area surrounding a motor vehicle is derived from sensed information about the external surroundings of the motor vehicle, and a decision about countermeasures (15) is made on the basis of this situation prediction (8), **characterized in that** a driver type detection (9) is carried out on the basis of information from other sensors and operator controls (2) using a driver assessment knowledge base (10), said detection (9) supplying a driver type representation (11) as a result, wherein a driver reaction prediction (12) is derived from the driver type representation (11) and the situation prediction (8), and the driver reaction prediction (12) and the situation prediction (8) are combined with one another in order to arrive at a decision (14) about countermeasures (15).

2. Method according to Claim 1, **characterized in that** the information about the surroundings of the motor vehicle which is sensed by one or more sensors (1) for sensing the surroundings is subjected to a sensor fusion and scene interpretation (3), as a result of which a consistent spatial/chronological description (4) of the scene surrounding the motor vehicle is derived using movement models and shape models (4a), the scene description (4) is subsequently subjected to a situation detection and interpretation (5) using a situation knowledge base (6), the detected and interpreted situation is stored in a situation memory (7) which stores a defined number of situations in a chronological sequence and the situation prediction (8) is made on the basis of the situations stored in the situation memory (7).

3. Method according to Claim 2, **characterized in that** information from other sensors and operator controls (2) of the motor vehicle are included in the situation detection and interpretation (5), wherein the other sensors and operating controls (2) determine information about the driver and his control of the motor vehicle.

4. Method according to one of Claims 2 or 3, **characterized in that** the chronological sequence of the storage of the detected and interpreted situations in the situation memory (7) is used for the situation prediction (8).

5. Method according to one of the preceding claims, **characterized in that** countermeasures (15) are derived from the situation prediction (8) and the driver reaction prediction (12) using a driver/system behaviour knowledge base (13).

6. Method according to Claim 5, **characterized in that** the countermeasures are formed by comparing (14) the driver reaction prediction (12) and the situation prediction (8) with the driver/system knowledge base (13).

7. Method according to one of the preceding claims, **characterized in that** actively intervening measures (16) such as AEB (automatic emergency braking system), ABS (anti-lock brake system), TCS (traction control system), ESP (electronic stability programme), and/or steering interventions are initiated and carried out as countermeasures (15).

8. Method according to one of Claims 1 to 6, **characterized in that** visual, audible and/or haptic measures (16) are taken as countermeasures (15).

9. Driver assistance system for carrying out the method according to one of the preceding claims having a first group (1) of sensors with one or more sensors for detecting the surroundings of a motor vehicle, a second group (2) of sensors with one or more sensors for detecting the driver and his driving behaviour, a control unit and a memory unit, **characterized in that** the control unit has means for forming and combining the driver reaction prediction (12) and the situation prediction (8) according to the method in accordance with one of the preceding claims.

## Revendications

1. Procédé d'assistance d'un conducteur d'un véhicule automobile dans lequel une prédiction (8) de la situation actuelle du champ périphérique d'un véhicule automobile est dérivée d'informations détectées relatives à l'environnement extérieur du véhicule automobile, et sur la base de cette prédiction de situation (8), une décision est prise relativement à des contre-mesures (15), **caractérisé en ce qu'**à partir d'informations d'autres capteurs et éléments de commande (2), en utilisant une base de connaissance d'analyse du conducteur (10), une reconnaissance de type de conducteur (9) est effectuée qui fournit comme résultat une représentation d'un type de conducteur (11), une prédiction de la réaction du conducteur (12) étant dérivée de la représentation du type de conducteur (11) et de la prédiction de situation (8), et la prédiction de la réaction du conducteur (12) ainsi que la prédiction de situation (8) étant associées pour parvenir à une décision (14) relative aux contre-mesures (15).

2. Procédé selon la revendication 1, **caractérisé en ce que**
- les informations relatives à l'environnement du véhicule automobile détectées par un ou plusieurs capteurs de détection de l'environnement (1) sont soumises à une fusion des capteurs et à une interprétation de la scène (3), ce par quoi, en utilisant des modèles de déplacement et des modèles de forme (4a), une description cohérente espace-temps (4) de la scène entourant le véhicule automobile est déduite,
- la description de la scène (4) est ensuite soumise à une reconnaissance et à une interprétation de la situation (5) en utilisant une base de connaissance de situation (6),
- la situation reconnue et interprétée est enregistrée dans une mémoire de situation (7) qui mémorise un nombre prédéfini de situations en succession temporelle, et
- à partir des situations mémorisées dans la mémoire de situation (7), la prédiction de situation (8) est effectuée.

3. Procédé selon la revendication 2, **caractérisé en ce que** des informations d'autres capteurs et éléments de commande (2) du véhicule automobile sont entrées dans la reconnaissance et l'interprétation de situation (5), les autres capteurs et éléments de commande (2) déterminant des informations relatives au conducteur et à sa commande du véhicule automobile.

4. Procédé selon l'une quelconque des revendications 2 ou 3, **caractérisé en ce que** la succession temporelle des enregistrements des situations reconnues et interprétées est utilisée dans la mémoire de situation (7) pour la prédiction de situation (8).

5. Procédé selon l'une quelconque des revendications précédentes, **caractérisé en ce que** l'on dérive de la prédiction de situation (8) et de la prédiction de la réaction du conducteur (12) des contre-mesures (15) en utilisant une base de connaissance du comportement du conducteur/système (13).

6. Procédé selon la revendication 5, **caractérisé en ce que** les contre-mesures sont exécutées par une comparaison (14) de la prédiction de la réaction du conducteur (12) et de la prédiction de situation (8) avec la base de connaissance du conducteur/système (13).

7. Procédé selon l'une quelconque des revendications précédentes, **caractérisé en ce que** l'on introduit et exécute en tant que contre-mesures (15), des mesures d'intervention actives (16), comme ANB, ABS, ASR, ESP et/ou une intervention sur la direction.

8. Procédé selon l'une quelconque des revendications 1 à 6, **caractérisé en ce que** l'on prend des mesures optiques, acoustiques et/ou tactiles (16) en tant que contre-mesures (15).

9. Système d'assistance d'un conducteur pour la mise en oeuvre du procédé selon l'une quelconque des revendications précédentes, comprenant un premier groupe (1) de capteurs avec un ou plusieurs capteurs servant à la détection de l'environnement d'un véhicule automobile, un deuxième groupe (2) de capteurs avec un ou plusieurs capteurs servant à la détection du conducteur et de son comportement de conduite, une unité de commande et une unité de mémoire,
**caractérisé en ce que** l'unité de commande dispose de moyens pour constituer et associer la prédiction de la réaction du conducteur (12) et la prédiction de situation (8) selon le procédé selon l'une quelconque des revendications précédentes.
